(19) Europäisches Patentamt
European Patent Office
Office européen des brevets

(11) **EP 3 280 081 A1**

(12) **EUROPEAN PATENT APPLICATION**
published in accordance with Art. 153(4) EPC

(43) Date of publication:
**07.02.2018 Bulletin 2018/06**

(51) Int Cl.:
***H04J 99/00*** *(2009.01)* ***H04B 7/04*** *(2017.01)*
***H04W 16/28*** *(2009.01)*

(21) Application number: **16772419.4**

(22) Date of filing: **18.03.2016**

(86) International application number:
**PCT/JP2016/058869**

(87) International publication number:
**WO 2016/158537 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 JP 2015073867**

(71) Applicant: **NTT DOCOMO, INC.**
**Chiyoda-ku**
**Tokyo 100-6150 (JP)**

(72) Inventors:
• **SAITO, Keisuke**
**Tokyo 100-6150 (JP)**
• **BENJEBBOUR, Anass**
**Tokyo 100-6150 (JP)**
• **SUYAMA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **WIRELESS BASE STATION, USER TERMINAL, AND WIRELESS COMMUNICATION METHOD**

(57)    To suppress deterioration of reception characteristics even in the case where a radio base station performs power multiplexing on downlink signals to transmit, a radio base station according to one aspect of the present invention has a transmission section that performs power multiplexing on downlink signals to a plurality of user terminals each having a MIMO configuration to transmit, and a control section that controls a phase rotation applied to the downlink signal to each user terminal, where the control section controls so as to apply different phase rotations to the downlink signals.

FIG. 1B

**Description**

Technical Field

The present invention relates to a radio base station, user terminal and radio communication method in the next-generation mobile communication system.

Background Art

In UMTS (Universal Mobile Telecommunications System) networks, for the purpose of higher data rates, low delay and the like, Long Term Evolution (LTE) has been specified (Non-patent Document 1). Then, for the purpose of wider bands and higher speed than LTE, a successor system called LTE-Advanced (also called LTE-A) to LTE has been studied and specified as LTE Rel. 10~12.

Further, in the future radio communication systems (from LTE Rel. 13 onward), as an allocation scheme of downlink radio resources, it has been studied using Non-Orthogonal Multiple Access (NOMA) based on the premise of interference cancellation on the reception side, in addition to conventional OFDMA (Orthogonal Frequency Division Multiple Access).

Prior Art Document

Non-patent Document

[Non-patent Document 1] 3GPP TS 36.300 "Evolved Universal Terrestrial Radio Access (E-UTRA) and Evolved Universal Terrestrial Radio Access Network (E-UTRAN); Overall description; Stage 2"

Disclosure of Invention

Problems to be Solved by the Invention

In NOMA, downlink signals (OFDMA signals) to a plurality of user terminals are superposed on the same radio resources. Each of the downlink signals is corrected for amplification corresponding to a predetermined transmit power ratio, is multiplexed (power-multiplexed) in the power domain, and is transmitted. A user terminal on the reception side processes the downlink signal by a signal separation method such as Successive Interference Cancellation (SIC), thereby separates signals to the other user terminals, and is capable of extracting a signal to the user terminal.

However, in the case of using NOMA, as compared with the case of using only OFDMA, since signals to many user terminals are multiplexed into the same radio resources, there is the risk that separation of signals is made difficult. Therefore, there are problems that reception characteristics of the downlink signal deteriorate, and that throughput degrades.

The present invention was made in view of such a respect, and it is an object of the invention to provide a radio base station, user terminal and radio communication method for enabling deterioration of reception characteristics to be suppressed even in the case where a radio base station performs power multiplexing on downlink signals to transmit.

Means for Solving the Problem

A radio base station according to one aspect of the present invention has a transmission section that performs power multiplexing on downlink signals subsequent to precoding multiplication to a plurality of user terminals each having a MIMO (Multiple-Input Multiple-Output) configuration to transmit, and a control section that controls a phase rotation applied to the downlink signal to each user terminal, where the control section controls so as to apply different phase rotations to the downlink signals subsequent to precoding multiplication.

Advantageous Effect of the Invention

According to the present invention, it is possible to suppress deterioration of reception characteristics, even in the case where a radio base station performs power multiplexing on downlink signals to transmit.

Brief Description of Drawings

FIG. 1 contains schematic explanatory diagrams of NOMA;

FIG. 2 is a diagram showing one example of modulated signals of downlink signals in NOMA;

FIG. 3 is a diagram showing one example of a transmitter according to one Embodiment of the present invention;

FIG. 4 contains diagrams showing one example of receivers according to one Embodiment of the invention;

FIG. 5 is a diagram showing one example of modulated signals of downlink signals transmitted to user terminals in one Embodiment of the invention;

FIG. 6 contains diagrams showing one example of receivers according to another Embodiment of the invention;

FIG. 7 contains diagrams showing tables according to one Embodiment of the invention;

FIG. 8 contains diagrams showing one example of downlink signals in the case of using MU-MIMO in one Embodiment of the invention;

FIG. 9 is a diagram showing one example of a schematic configuration of a radio communication system according to one Embodiment of the invention;

FIG. 10 is a diagram showing one example of an entire configuration of a radio base station according to one Embodiment of the invention;

FIG. 11 is a diagram showing one example of a function configuration of the radio base station according to one Embodiment of the invention;

FIG. 12 is a diagram showing one example of an entire configuration of a user terminal according to one Embodiment of the invention; and

FIG. 13 is a diagram showing one example of a function configuration of the user terminal according to one Embodiment of the invention.

Best Mode for Carrying Out the Invention

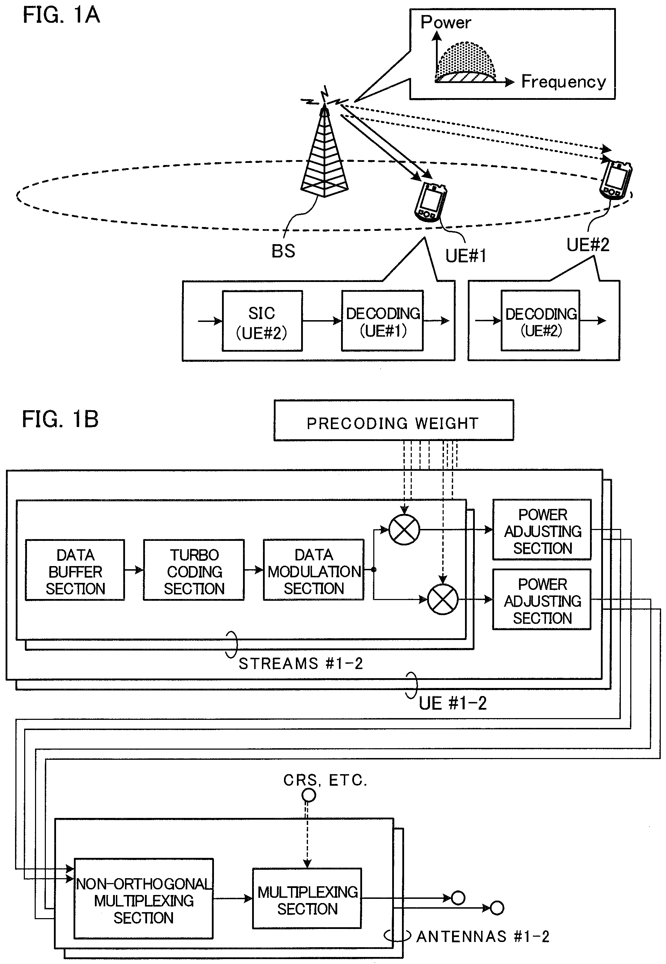

FIG. 1 contains schematic explanatory diagrams of NOMA. FIG. 1A illustrates the case where a radio base station BS transmits downlink signals to a plurality of user terminals UEs by NOMA. FIG. 1B shows one example of a configuration of a transmitter used in the radio base station BS of FIG. 1A.

FIG. 1A illustrates the case where a user terminal UE#1 is positioned near the radio base station BS, and a user terminal UE#2 is positioned far away from the radio base station BS, inside a coverage area of the radio base station BS. Herein, signals of the user terminal UE#1 and user terminal UE#2 are power-multiplexed into downlink signals transmitted from the radio base station BS.

A path loss of the downlink signal to each of the user terminals UE#1 and UE#2 from the radio base station BS increases, as the distance from the radio base station BS increases. Therefore, a received SINR (Signal to Interference plus Noise Ratio) of the user terminal UE#2 far from the radio base station BS is lower than a received SINR of the user terminal UE#1 near the radio base station BS.

In NOMA, by varying transmit power corresponding to channel gain (e.g. received SINR, RSRP (Reference Signal Received Power)), path loss and the like, downlink signals of a plurality of user terminals UEs are non-orthogonally multiplexed into the same radio resources. For example, in FIG. 1A, downlink signals to the user terminals UE#1 and UE#2 are multiplexed into the same radio resources with different transmit power. Relatively low transmit power is allocated to the downlink signal to the user terminal UE#1 with a high received SINR, and relatively high transmit power is allocated to the downlink signal to the user terminal UE#2 with a low received SINR.

Further, in NOMA, for example, by removing an interference signal from a received signal by SIC that is a successive interference cancellation type signal separation method, a downlink signal to the terminal is extracted. Among downlink signals non-orthogonally multiplexed into the same radio resources, the interference signal is a downlink signal to another terminal with higher transmit power than that of the terminal. Therefore, by removing the downlink signal to another terminal with higher transmit power than that of the terminal by SIC, the downlink signal to the terminal is extracted.

For example, the downlink signal to the user terminal UE#2 is transmitted with higher transmit power than that of the downlink signal to the user terminal UE#1. Therefore, the user terminal UE#1 near the radio base station BS receives the downlink signal to the user terminal UE#2 non-orthogonally multiplexed into the same radio resources as the interference signal, in addition to the downlink signal to the UE#1. The user terminal UE#1 removes the downlink signal to the user terminal UE#2 by SIC, and is thereby capable of extracting the downlink signal to the UE#1 to properly decode.

On the other hand, the downlink signal to the user terminal UE#1 is transmitted with lower transmit power than that of the downlink signal to the user terminal UE#2. Therefore, the user terminal UE#2 far from the radio base station BS is capable of neglecting interference by the downlink signal to the user terminal UE#1 non-orthogonally multiplexed into the same radio resources, and is thereby capable of extracting the downlink signal to the UE#2 to properly decode, without performing interference cancellation by SIC.

FIG. 1B illustrates one example of a configuration of a transmitter (radio base station BS) for transmitting downlink signals to the user terminals UE#1 and UE#2. For each user terminal, the transmitter encodes data to stream #1 and stream #2, modulates, multiplies by a precoding weight (precoding vector) and adjusts power. Then, after performing non-orthogonal multiplexing on signals with power adjusted to respective user terminals UE#1 and UE#2, the transmitter further multiplexes a CRS (Cell-specific Reference signal) and the like, and transmits as the downlink signal using a plurality of antennas #1 and #2.

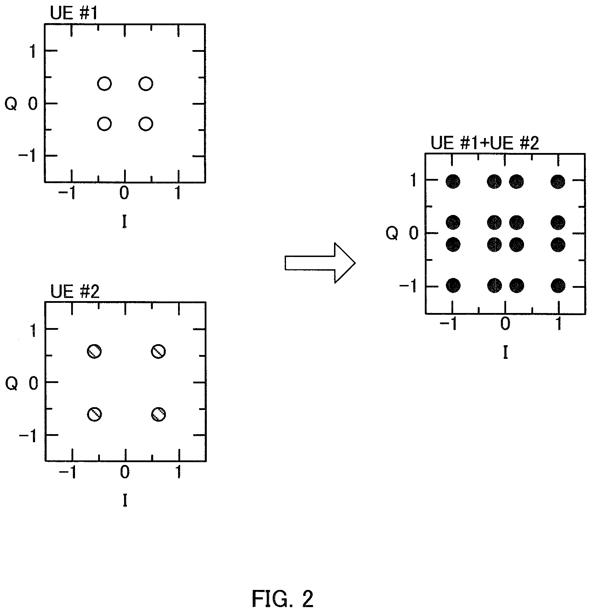

Described herein is non-orthogonal multiplexing processing in the transmitter. FIG. 2 is a diagram showing one example of modulated signals of downlink signals in NOMA. As shown in FIG. 2, the modulated signals are expressed by modulation points in the IQ plane. Herein, in the IQ plane, the horizontal axis represents the I axis (In-phase) representing an in-phase component, and the vertical axis represents the Q axis (Quadrature-phase) representing a quadrature component. In the IQ plane, a distance between the origin point and the modulation point represents amplitude of a modulated signal, and an angle between the positive direction of the I axis and the modulation point represents a phase of the modulated signal.

On the left side of FIG. 2, modulated signals of the user terminal UE#1 and UE#2 are respectively shown, and on the right side, signals obtained by performing power multiplexing on the modulated signals are shown. In FIG. 2, a transmit power ratio of the user terminal UE#1 is "0.3", and a transmit power ratio of the user terminal UE#2 is "0.7". Hereinafter, as the transmit power ratio, a level of transmit power of a particular user terminal to entire transmit power is expressed by the radio. In addition, in FIG. 2, to simplify, modulated signals are signals modulated by QPSK (Quadrature Phase Shift Keying).

Thus, in the case of applying NOMA on downlink, it is possible to multiplex downlink signals to a plurality of user terminals, UE#1 and UE#2, into the same radio resources by changing transmit power, and it is thereby possible to improve spectral usage efficiency.

On the other hand, corresponding to the transmit power ratio, modulation scheme and the like of the modulation point, there is the risk that the distance between modulation points decreases, and that a particular modulation point is confused with another adjacent modulation point. Therefore, when downlink signals of a plurality of user terminals are subjected to power multiplexing without any modification, there is the risk that a plurality of nearby modulation points are not distinguished from one another.

In one example shown in FIG. 2, the number of modulation points of each of the user terminals UE#1 and UE#2 is "4", and by applying non-orthogonal multiplexing to the points, the number of modulation points is "16". Since the distance between modulation points of signals subsequent to power multiplexing varies with the transmit power ratio, modulation scheme or the like, there is a case that a region with a small modulation-point distance occurs. In the region with a small modulation-point distance, there is the risk that reception characteristics deteriorate.

Therefore, as a result of studying modulation points of signals transmitted to a plurality of user terminals, the inventors of the present invention conceived adjusting the modulation-point distance using parameters except the transmit power ratio. Specifically, the inventors of the invention conceived controlling so that phase rotations of downlink signals transmitted to a plurality of user terminals are different from one another, and arrived at the present invention. According to the invention, it is possible to increase the modulation-point distance of power-multiplexed signals to a plurality of user terminals, and it is thereby possible to suppress decrease in throughput due to deterioration of reception characteristics.

Radio communication methods according to Embodiments of the present invention will be described below in detail.

In this Embodiment, different phase rotations are applied to a plurality of user terminals. As a method of applying different phase rotations to a plurality of user terminals, for example, considered is the case of applying a different phase rotation $\theta$ to each of a plurality of user terminals, or the case of selectively applying a phase rotation to only a part of user terminals. The case of applying the phase rotation $\theta$ to a single user terminal will be shown below, and is equal to that the phase rotation $\theta$ is applied to the user terminal UE#1, and that a phase rotation of 0 degree is applied to the user terminal UE#2. Accordingly, the example described below is also considered applying different phase rotations to a plurality of user terminals.

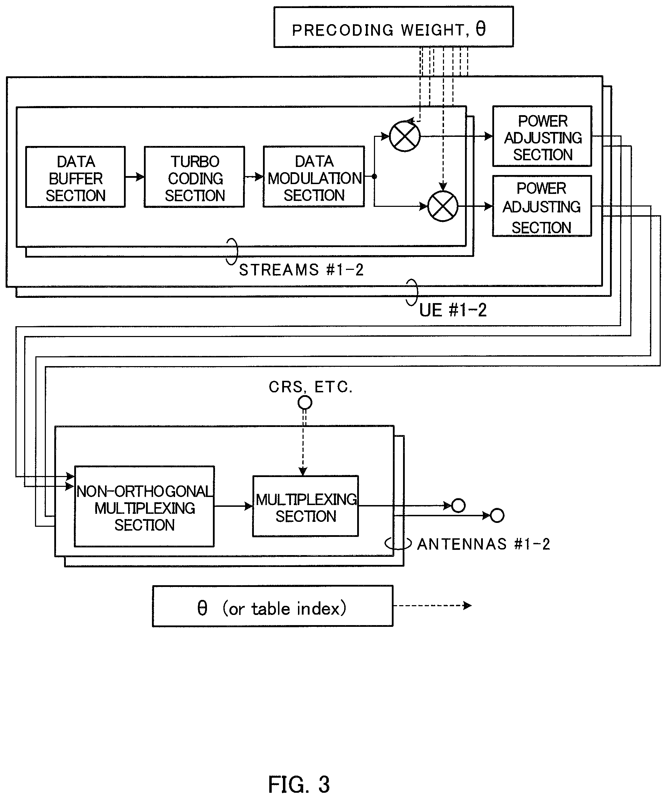

FIG. 3 is a diagram showing one example of a transmitter according to one Embodiment of the present invention. In this Embodiment, the case of 2x2 MIMO (Multiple Input Multiple Output) is assumed, and streams #1 and #2 represent layers in MIMO. In addition, the following configuration is only illustrative, and different configurations other than the configuration are capable of being applied. For example, also in 4x4 MIMO, configurations may be applied where it is possible to obtain the same effect as in this Embodiment.

The transmitter shown in FIG. 3 differs from the transmitter of FIG. 1B in the respect of applying a phase rotation $\theta$. For the user terminals UE#1 and UE#2, the transmitter encodes data to the streams #1 and #2, modulates, and then, multiplies by precoding weights. Herein, the precoding weights may be the same value or different values between the user terminals. Then, the transmitter multiplies each of the streams #1 and #2 of the user terminal UE#1 by a phase rotation $\theta$. Herein, the phase rotation may be on a sub-band-by-sub-band basis, or may be a value common to the entire band. Further, the transmitter performs non-orthogonal multiplexing on the modulated signal to each of the user terminals UE#1 and UE#2 subsequent to power adjustment to multiplex with the CRS. The multiplexed signal is transmitted as the downlink signal via a plurality of antennas, #1 and #2. Hereinafter, unless otherwise required, it is assumed that processing is performed on the streams #1 and #2.

The transmitter according to this Embodiment notifies the user terminal of information on the phase rotation θ required in demodulation and decoding. The information on the phase rotation θ may be the phase rotation θ itself, or may be another indicator capable of designating θ. For example, the information may be an index associated in a table as described later.

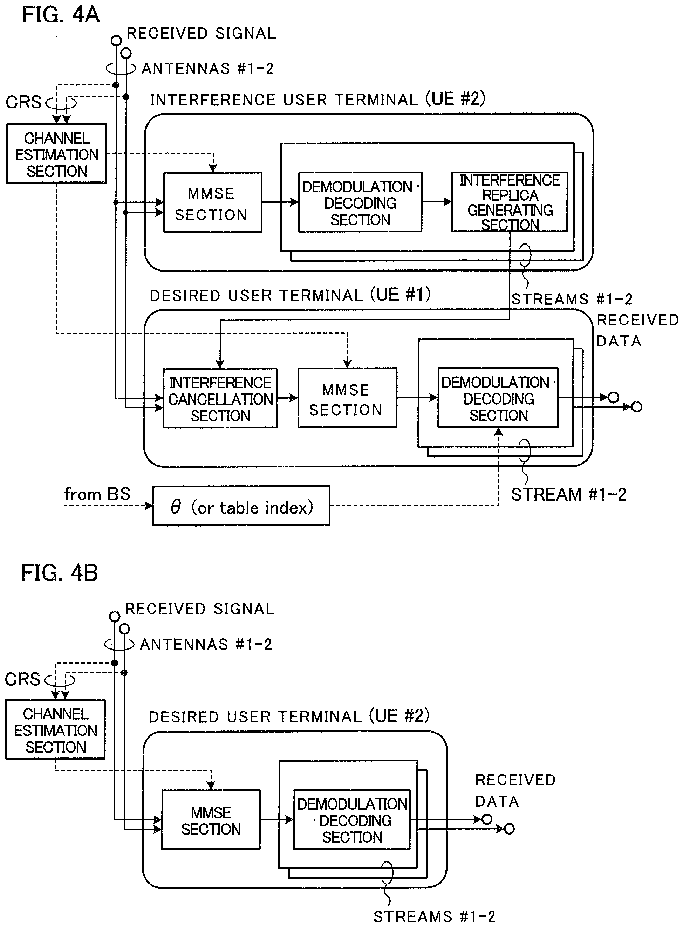

FIG. 4 contains diagrams showing one example of receivers according to one Embodiment of the present invention. FIG. 4 illustrates receivers for receiving power-multiplexed modulated signals transmitted from the transmitter. FIG. 4A illustrates a receiver for properly decoding data (received data) to the terminal from the power-multiplexed modulated signal including information to the terminal, by performing interference cancelation by SIC in an interference cancellation section. FIG. 4B illustrates a receiver for properly decoding data (received data) to the terminal from the power-multiplexed modulated signal transmitted to the terminal, without performing SIC.

Herein, each of FIGs. 4A and 4B illustrates the configuration of the receiver according to reception processing, and the receiver is provided with necessary configurations as appropriate as well as the configuration. Further, a single user terminal is capable of having the function of the receiver as shown in FIG. 4B and the function of the receiver as shown in FIG. 4A, and of performing each function based on a signal to receive.

In this Embodiment, FIG. 4A is a diagram corresponding to reception processing of the user terminal UE#1 of FIG. 1A, and FIG. 4B is a diagram corresponding to reception processing of the user terminal UE#2 of FIG. 1A.

Referring to FIG. 4A, the user terminal UE#1 for performing interference cancellation (SIC) will be described below. The receiver receives a modulated signal transmitted from the transmitter. In the received modulated signal (received signal), a modulated signal (hereinafter, described as modulated signal of the UE#1) toward the user terminal (desired user terminal) UE#1 is power multiplexed. Further, a modulated signal (hereinafter, described as modulated signal of the UE#2) toward another user terminal (interference user terminal) UE#2 is also power multiplexed.

As described above, since the distance from the radio base station (transmitter) is different between the user terminals UE#1 and UE#2, the transmit power ratio is different between the user terminals UE#1 and UE#2. As shown in FIG. 1A, the transmit power ratio of a modulated signal to the user terminal UE#1 multiplexed into the modulated signal is smaller than the transmit power ratio of a modulated signal of the user terminal UE#2. Accordingly, in the case of processing without separating the power-multiplexed signal of the modulated signal, data of the user terminal UE#1 is not capable of being demodulated or decoded. Therefore, in order to extract data of the user terminal UE#1, it is necessary to remove the modulated signal of the interference user terminal UE#2 from the power-multiplexed modulated signal.

Accordingly, the user terminal UE#1 estimates the modulated signal of the user terminal UE#2 from the power-multiplexed modulated signal to remove, and thereby extracts the modulated signal of the terminal UE#1. Specifically, the user terminal UE#1 performs channel estimation using the CRS multiplexed into the received signal. Then, in an MMSE (Minimum Mean Square Error) section, the UE#1 obtains the modulated signal of the user terminal UE#2 from the multiplexed modulated signal and the result of channel estimation by a least square method. Further, the UE#1 demodulates and decodes the modulated signal of the user terminal UE#2 to generate an interference replica.

Using the interference replica of the modulated signal of the user terminal UE#2, the user terminal UE#1 obtains the modulated signal of the user terminal UE#1. Specifically, the user terminal UE#1 removes the interference replica from the power-multiplexed modulated signal, and obtains an interference replica-removed signal in an interference cancellation section. Then, the UE#1 estimates the modulated signal of the user terminal UE#1 from the interference replica-removed signal and the above-mentioned result of channel estimation by the least square method in the MMSE section.

The receiver further receives the information on the phase rotation θ transmitted from the transmitter. The phase rotation θ is applied to the modulated signal of the user terminal UE#1 subjected to power multiplexing. Using the received information on the phase ration θ, the receiver cancels the added phase ration θ. By this means, the receiver estimates the modulated signal of the user terminal UE#1 prior to application of the phase ration θ. The receiver demodulates and decodes the modulated signal, and thereby acquires data (received data) to the user terminal UE#1.

Next, referring to FIG. 4B, the user terminal UE#2 that does not perform interference cancellation SIC will be described. The transmit power ratio of the user terminal UE#2 is larger than the transmit power ratio of the user terminal UE#1. Therefore, without removing the modulated signal of the user terminal UE#1, the user terminal UE#2 is capable of demodulating and decoding data of the user terminal UE#2. Specifically, the user terminal UE#2 performs channel estimation using the CRS multiplexed into the received signal. Then, in an MMSE section, the UE#2 estimates the modulated signal of the user terminal UE#2 prior to power multiplexing, by the least square method based on the result of channel estimation and the power-multiplexed modulated signal (received signal). The UE#2 demodulates and decodes the estimated modulated signal, and thereby acquires data (received data) of the user terminal UE#2.

By this means, each of the user terminals UE#1 and UE#2 is capable of extracting the data to the terminal from the received signal i.e. power-multiplexed modulated signal.

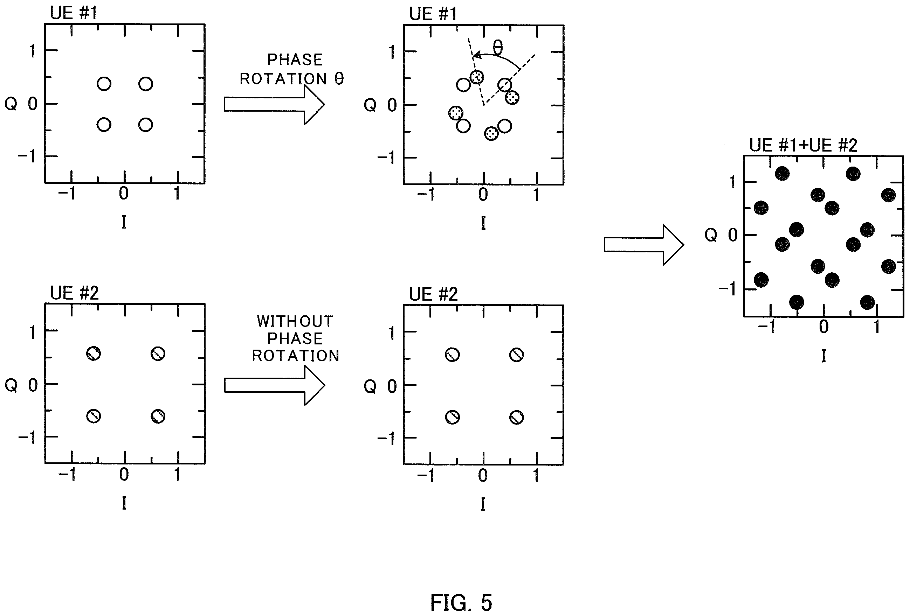

Next, referring to FIG. 5, the phase rotation $\theta$ that the transmitter applies to the modulated signal will be described. FIG. 5 is a diagram showing one example of modulated signals of downlink signals transmitted to user terminals according to one Embodiment of the present invention. In FIG. 5, as in FIG. 2, modulated signals of the user terminals UE#1 and UE#2 are power-multiplexed. However, there is a difference in the respect that the phase rotation $\theta$ is applied to the modulated signal of the user terminal UE#1. The difference will be described specifically. At the left end of FIG. 5, diagrams of original modulated signals of the user terminals UE#1 and UE#2 are shown. In the modulated signals, the phase rotation $\theta$ is applied to the user terminal UE#1, while not applying a phase rotation to the UE#2. The result is two center diagrams of FIG. 5. In the UE#1 in the upper stage, four modulation points are shifted to positions rotated $\theta$ from white circles (original modulation points), respectively. Then, modulation points obtained by power multiplexing on modulated signals of the UE#1 and UE#2 are illustrated in a diagram shown at the right end of FIG. 5.

Herein, the number of modulation points of the graph obtained by performing power multiplexing on modulated signals of two user terminals is "16", and is the same in FIGs. 2 and 5. However, in FIGs. 2 and 5, the arrangement of the modulated signals in the IQ plane differs from one another.

Accordingly, by varying the phase rotation $\theta$, the arrangement of power-multiplexed modulation points in the IQ plane differs. At this point, the distance between modulation points differs in accordance with the change of the arrangement of the modulation points. Therefore, by changing a value of the phase rotation $\theta$ as appropriate, it is possible to change the modulation-point distance. As described above, when the distance between modulation points decreases, there is the risk that a plurality of adjacent modulation points is confused. According to this Embodiment, by controlling a value of the phase rotation $\theta$ as appropriate, it is possible to control the modulation-point distance. By this means, it is possible to suppress confusion between modulation points, and it is possible to suppress deterioration of reception characteristics of the receiver.

As described above, for a signal transmitted to each user terminal, by applying phase rotations different for each signal, it is possible to suppress deterioration of reception characteristics of each user terminal.

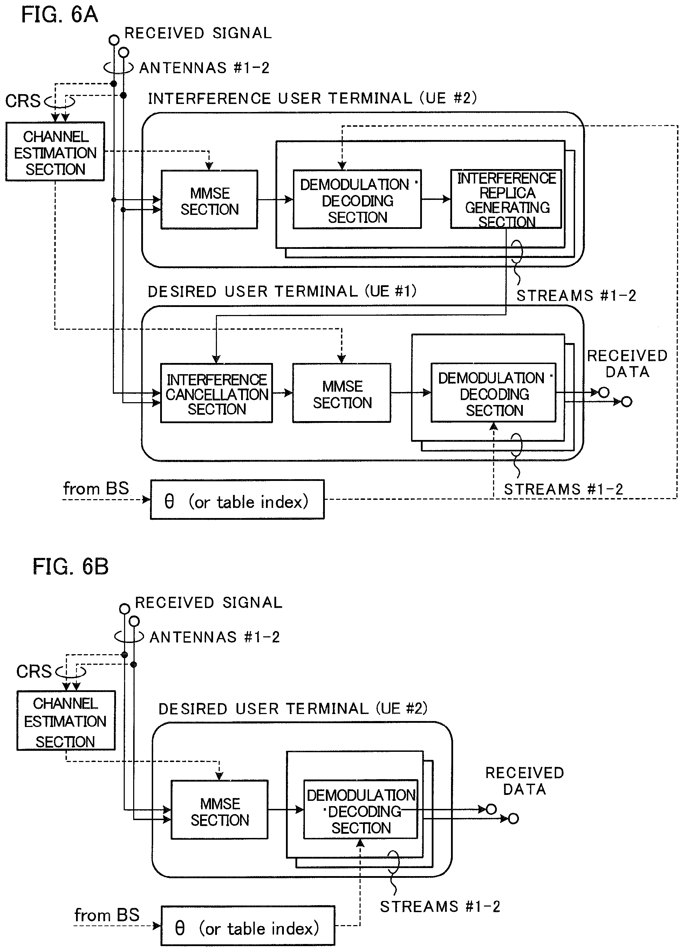

The case of applying different phase rotations $\theta$ to a plurality of user terminals will be described. In this case, the transmitter applies different phase rotations $\theta$ (e.g. $\theta_1$, $\theta_2$) to respective modulated signals of the user terminals UE#1 and UE#2. Then, the transmitter power-multiplexes the phase-rotated modulated signals, and transmits information on the phase rotation to the receiver. The receiver has a configuration as shown in FIG. 6. FIG. 6 contains diagrams showing one example of receivers according to the Embodiment of the present invention.

FIG. 6 is different from FIG. 4 in the respect of using the phase rotation $\theta_1$ for the user terminal UE#1 in demodulation decoding, and using the phase rotation $\theta_2$ for the user terminal UE#2. In this case, since it is possible to control two phase rotations $\theta_1$, $\theta_2$, it is possible to control the distance between modulation points more finely.

In addition, this Embodiment may adopt a configuration where each stream is multiplied by a different phase rotation $\theta$, or another configuration where each stream is multiplied by the same phase rotation $\theta$.

A specific example of modulated signals to multiplex will be described next. In conventional NOMA, for example, a received signal vector Y is expressed by the following equations (1) and (2). The equation (1) corresponds to TM (transmission mode) 3, and the equation (2) corresponds to TM4.

[Mathematics 1]

Equation (1)

$$\mathbf{Y} = \mathbf{H}\sqrt{P_1}\mathbf{W}\mathbf{X}_1 + \mathbf{H}\sqrt{P_2}\mathbf{W}\mathbf{X}_2 + \mathbf{N}$$

Equation (2)

$$\mathbf{Y} = \mathbf{H}\sqrt{P_1}\mathbf{W}_1\mathbf{X}_1 + \mathbf{H}\sqrt{P_2}\mathbf{W}_2\mathbf{X}_2 + \mathbf{N}$$

Herein, **H** represents a channel vector, $\sqrt{P_i}$ represents a transmit power ratio of a UE#i, **W**i represents a transmission signal weight (precoding weight) of the UE#i, **X**i represents a data (transmission signal) vector of the UE#i, N represents noise, and Y represents a received signal vector (modulated signal vector). In TM3, each UE is set for the same weight W.

Further, the first term of the right side of each of the equations (1) and (2) represents a modulated signal vector subsequent to precoding weight multiplication of the user terminal UE#1, and the second term of the right side represents a modulated signal vector subsequent to precoding weight multiplication of the user terminal UE#2. Herein, the signal vector obtained by adding the modulated signals of the user terminals UE#1 and UE#2 is transmitted from the transmitter to the receiver.

In the method expressed by the equations (1) and (2), for example, as shown in FIG. 2, in the case of power-multiplexing a plurality of modulation points, the distance between modulation points is short, and the distance between modulation points of the received signal vector Y is short.

On the other hand, in this Embodiment, by multiplying the term of at least one user terminal UE#i by a phase rotation vector, interference among the modulated signals is suppressed. For example, a received signal Y obtained by multiplying UE#1 by a phase rotation matrix is expressed by the following equation (3) in the case of TM3, while being expressed by the following equation (4) in the case of TM4.

[Mathematics 2]

Equation (3)

$$\mathbf{Y} = \mathbf{H}\boldsymbol{\theta}\sqrt{P_1}\mathbf{W}\mathbf{X}_1 + \mathbf{H}\sqrt{P_2}\mathbf{W}\mathbf{X}_2 + \mathbf{N}$$

Equation (4)

$$\mathbf{Y} = \mathbf{H}\boldsymbol{\theta}\sqrt{P_1}\mathbf{W}_1\mathbf{X}_1 + \mathbf{H}\sqrt{P_2}\mathbf{W}_2\mathbf{X}_2 + \mathbf{N}$$

In both of the equations (3) and (4), the first term of the right side of each of the equations (1) and (2) is multiplied by the phase rotatoin vector θ from the left. The phase rotatoin matrix θ corresponds to the phase rotatoin θ in the IQ plane shown in FIG. 5.

With respect to the above-mentioned equation (4), specific elements of the matrix will be described. Herein, since this Embodiment is of 2x2 MIMO configuration, the data vector $X_1$ is Rank 2, and has two layers including Layer 1 and Layer 2. When it is assumed that phase rotatoin $\theta_1$ is added to Layer 1 of $X_1$, and that phase rotatoin $\theta_2$ is added to Layer 2, it is possible to express the equation (4) by the following equation (5). Further, when the equation (5) is expanded, row elements $y_1$ and $y_2$ of Y are expressed by the following equations (6) and (7).

[Mathematics 3]

Equation (5)

$$\begin{pmatrix} y_1 \\ y_2 \end{pmatrix} = \sqrt{P_1}\begin{pmatrix} h_{11} & h_{12} \\ h_{21} & h_{22} \end{pmatrix}\begin{pmatrix} e^{j\theta_1} & 0 \\ 0 & e^{j\theta_2} \end{pmatrix}\begin{pmatrix} w_{11}^1 & w_{12}^1 \\ w_{21}^1 & w_{22}^1 \end{pmatrix}\begin{pmatrix} x_{11} \\ x_{12} \end{pmatrix} + \sqrt{P_2}\begin{pmatrix} h_{11} & h_{12} \\ h_{21} & h_{22} \end{pmatrix}\begin{pmatrix} w_{11}^2 & w_{12}^2 \\ w_{21}^2 & w_{22}^2 \end{pmatrix}\begin{pmatrix} x_{21} \\ x_{22} \end{pmatrix} + \mathbf{N}$$

Equation (6)

$$y_1 = \sqrt{P_1}\left\{ x_{11}e^{j\theta_1}\left( h_{11}w_{11}^1 + h_{12}w_{21}^1 \right) + x_{12}e^{j\theta_2}\left( h_{11}w_{12}^1 + h_{12}w_{22}^1 \right) \right\}$$
$$+ \sqrt{P_2}\left\{ x_{21}\left( h_{11}w_{11}^2 + h_{12}w_{21}^2 \right) + x_{22}\left( h_{11}w_{12}^2 + h_{12}w_{22}^2 \right) \right\} + \mathbf{N}_1$$

Equation (7)

$$y_2 = \sqrt{P_1}\left\{ x_{11}e^{j\theta_1}\left( h_{21}w_{11}^1 + h_{22}w_{21}^1 \right) + x_{12}e^{j\theta_2}\left( h_{21}w_{12}^1 + h_{22}w_{22}^1 \right) \right\}$$
$$+ \sqrt{P_2}\left\{ x_{21}\left( h_{21}w_{11}^2 + h_{22}w_{21}^2 \right) + x_{22}\left( h_{21}w_{12}^2 + h_{22}w_{22}^2 \right) \right\} + \mathbf{N}_2$$

[Mathematics 4]

Herein, the right side of the equation (6) is capable of suppressing the term of $x_{12}e^{j\theta_2}\left( h_{11}w_{12}^1 + h_{12}w_{22}^1 \right)$ and the term of $x_{22}\left( h_{11}w_{12}^2 + h_{12}w_{22}^2 \right)$ by reception weight processing.

[Mathematics 5]

Similarly, also with respect to the right side of the equation (7), it is possible to suppress the term of $x_{11}e^{j\theta_1}\left(h_{21}w_{11}^1 + h_{22}w_{21}^1\right)$ and the term of $x_{21}\left(h_{21}w_{11}^2 + h_{22}w_{21}^2\right)$ by the reception weight processing.

[Mathematics 6]

Herein, in $e^{j\theta_1}$ and $e^{j\theta_2}$ representing phase rotations, $e^{j\theta_1}$ is multiplied by only $x_{11}$ representing the Layer 1, and $e^{j\theta_2}$ is multiplied by only $x_{12}$ representing the Layer 2. From the foregoing, by performing the processing of multiplying the phase rotation vector as in equation (5), it is possible to apply phase rotations $\theta$ different between Later 1 and Layer 2, corresponding to diagonal elements of the phase rotation vector $\theta$.

(Method of determining $\theta$)

Next, one example of methods of determining a phase rotation $\theta$ will be described.
In this Embodiment, the phase rotation $\theta$ is adjusted so that a scheduling metric expressed in equations (8) and (9) is the maximum.

[Mathematics 7]

Equation (8)

$$M(S_j, P_b, \theta_b) = \sum_{k \in Sj}\left(\frac{R_{k,b}(t, P_b, \theta_b)}{T_k(t)}\right)$$

Equation (9)

$$\left\{S_{j,\max}, P_{b,\max}, \theta_{b,\max}\right\} = \arg\max_{S_j, P_b, \theta_b} M\left(S_j, P_b, \theta_b\right)$$

Herein, in equations (8) and (9), $R_{k,b}(t, P_b, \theta_b)$ represents instantaneous throughput in transmit power ratio $P_b$, phase rotation $\theta_b$ and time t of a user k, and $T_k(t)$ represents average throughput of the user k at time t. Further, $S_j$ represents a user set, $P_b$ represents a transmit power ratio in a sub-band b, and $\theta b$ represents a phase rotation in the sub-band b. $M(S_j, P_b, \theta_b)$ represents a scheduling metric with the user set of $S_j$, sub-band b of the transmit power ratio $P_b$, and phase rotation $\theta_b$.

From these equations (8) and (9), it is possible to obtain $S_{j,\max}$, $P_{b,\max}$, and $\theta_{b,\max}$ that maximize $M(S_j, P_b, \theta_b)$. By using $\theta_{b,\max}$ at this point as a phase rotation $\theta$, the scheduling metric is made maximum.

In addition, in a transmission signal (modulated signal) that the transmitter transmits, a configuration may be made where the phase rotation $\theta$ is applied on a sub-band-by-sub-band basis, or another configuration may be made where the phase rotation $\theta$ is applied on a wideband-by-wideband basis.

Further, it may be configured to use a phase rotation $\theta$ such that the minimum value of the distance between modulated signals subsequent to multiplication of the precoding weight in the IQ plane or of the distance from an SIC decision point in the SIC receiver is the maximum, or it may be configured to use a phase rotation $\theta$ such that an average value of distances is the maximum. In this case, it may be configured to select a proper phase rotation $\theta$ from among beforehand determined phase rotations $\theta$, or it may be configured to select a proper phase rotation $\theta$ from among all values that the phase rotation $\theta$ is capable of taking.

The methods as described above are illustrative methods of determining a phase rotation $\theta$, and are not limited thereto. In addition, in this Embodiment, the phase rotation $\theta$ is applied to a modulated signal transmitted to a user terminal with a low transmit power ratio, but the invention is not limited thereto. For example, the phase rotation $\theta$ may be applied to a downlink signal transmitted to a user terminal with a high transmit power ratio.

(Method of notifying of $\theta$)

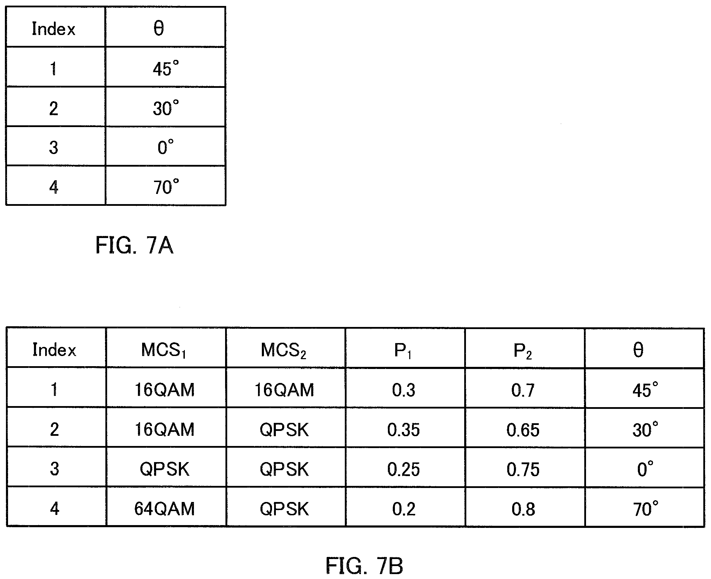

As a method of notifying of a phase rotation $\theta$, the method is not limited to explicit signaling for directly notifying of the phase rotation θ. Implicit signaling for indirectly notifying of the phase rotation θ may be used. For example, the case is considered where the transmitter and receiver beforehand hold tables as shown in FIG. 7. In this case, it may be configured that the transmitter notifies the receiver of a table index, and thereby indirectly informs of the phase rotation θ. In the case of holding the table that associates the phase rotation θ with a table index shown in FIG. 7A, a configuration is made where a value of the phase rotation θ is indirectly informed, by notifying of the table index.

Further, as shown in FIG. 7B, a configuration may be made where the phase rotation θ, MCS ($MCS_1$, $MCS_2$) (Modulation and coding Scheme), and transmit power ratio (multiplexing power ratio) ($P_1$, $P_2$) are indirectly informed, by notifying of a table index. In this case, θ, MCS and multiplexing power ratio are subjected to joint encoding and notified.

The radio base station notifies a user terminal of information on the phase rotation (θ, table index and the like). It is possible to notify of these pieces of information by a downlink control signal (DCI), higher layer signaling (e.g. RRC signaling) and the like.

In addition, in the case of applying the phase rotation θ to only a modulated signal of a single user terminal with a low transmit power ratio, it may be configured to notify only the user terminal of information on the phase rotation. In this case, the need is eliminated for notifying a user terminal with a high transmit power ratio of the information on the phase rotation, and it is possible to suppress decrease in throughput more suitably.

Further, in the case of applying phase rotations to modulated signals of a plurality of user terminals, it may be configured to notify a plurality of user terminals of information on the phase rotation individually. Alternatively, it may be configured to notify each user terminal of information on a common phase rotation.

Furthermore, when a predetermined condition is met, it may be configured that the radio base station does not apply the phase rotation to downlink signals of a plurality of user terminals not to notify of information on the phase rotation. For example, the radio base station may be configured not to apply the phase rotation when transmit power ratios of a plurality of user terminals are within a predetermined range, and to apply the phase rotation when the ratios fall outside the predetermined range. More specifically, the radio base station may not perform the phase rotation in the case where a difference in the transmit power ratio or the rate is higher than a certain value (e.g. the case where a power ratio of a user terminal with a lower transmit power ratio is 10% or less). Information on the condition may be notified from the radio base station to the user terminal. The notification may be notified by higher layer signaling (e.g. RRC signaling), broadcast information (e.g. SIB) and the like. In addition, non-application of the phase rotation may be actualized by applying the same phase rotation to a plurality of downlink signals.

Still furthermore, the radio base station may apply the same phase rotation as that of a data signal to a predetermined reference signal to transmit so that the user terminal thereby acquires information on the phase rotation. Herein, as the predetermined reference signal, it is preferable to use a user terminal-specific reference signal. For example, as the user terminal-specific reference signal, a DMRS (DeModulation Reference Signal) may be used. In this case, it may be configured that the radio base station multiplies the DMRS by the same phase rotation θ, transmit power ratio, and a value of the precoding vector as those of a data signal in a predetermined Layer of a targeted user terminal, and that the reception side detects θ and the like. Further, it may be configured that the DMRS is not multiplied by the transmit power ratio.

Moreover, the radio base station may be configured to notify of only the presence or absence of application of the phase rotation.

Further, the table that the transmitter and receiver hold is not limited to the configurations shown in FIG. 7. For example, a configuration may be made where one of transmit power ratios ($P_1$, $P_2$) is described. In this case, using the described transmit power ratio, it is possible to obtain the other transmit power ratio. Furthermore, a value of θ is not limited to a single value. Still furthermore, in FIG. 7, the maximum value of the table index is "4", but is not limited thereto. For example, it may be configured to use five or more, or three or less table indexes.

Furthermore, the number of tables that the transmitter and receiver are capable of holding is not limited to "1". For example, it may be configured that the transmitter and the receiver have a plurality of tables. In this case, for example, corresponding to the transmit power ratio, a different table may be used.

Still furthermore, instead of always fixing the table, it may be configured to vary the table in a semi-static manner. In this case, it may be configured that values of the table vary with a lapse of time. Moreover, the radio base station may notify the user terminal of information on the table. The notification may be notified by higher layer signaling (e.g. RRC signaling) and the like.

(Example in MIMO transmission)

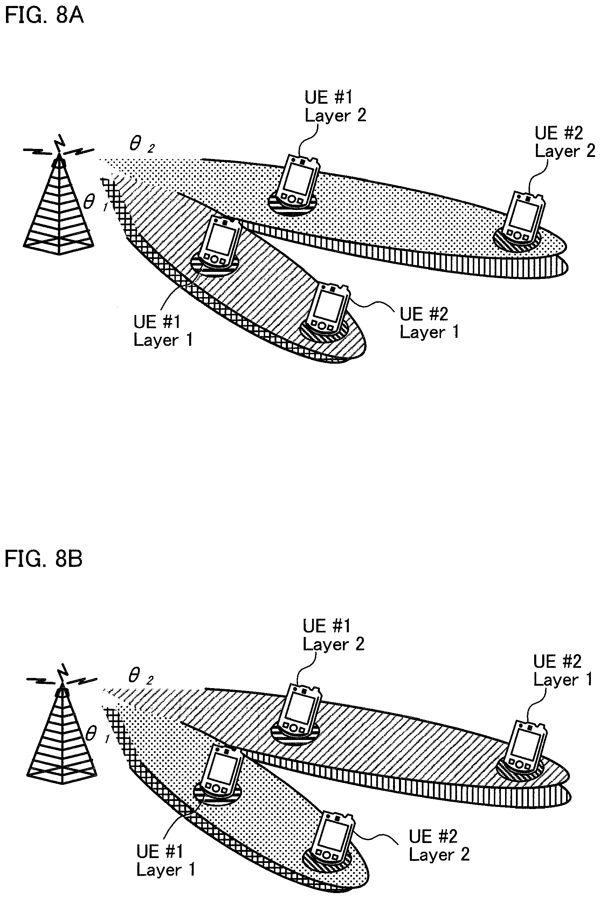

As one of exemplification in this Embodiment, considered is the case of applying a MIMO configuration shown in FIG. 8. FIG. 8 contains diagrams showing one example of downlink signals in the case of using MU-MIMO in one Embodiment of the present invention.

In FIG. 8, two user terminals UE#1 and UE#2 and radio base station perform 2x2 downlink MIMO transmission. In FIG. 8A, the radio base station applies a common phase rotation $\theta_1$ to Layers 1 of the user terminals UE#1 and UE#2, while applying a common phase rotation $\theta_2$ to Layers 2.

On the other hand, in FIG. 8B, the radio base station applies a common phase rotation $\theta_1$ to Layer 1 of the user terminal UE#1 and Layer 2 of the user terminal UE#2, while applying a common phase rotation $\theta_2$ to Layer 2 of the user terminal UE#1 and Layer 1 of the user terminal UE#2. In other words, different phase rotations are applied to the same Layers of the user terminals UE#1 and UE#2.

By the methods as described above, it is possible to improve gain by providing the scheduler with flexibility. For example, also in the case where different MCSs are applied between Layers and the like, it is possible to apply an optimal phase rotation.

(Radio communication system)

A configuration of a radio communication system according to one Embodiment of the present invention will be described below. In the radio communication system, radio communication methods according to the above-mentioned Embodiments of the invention are applied. In addition, the above-mentioned radio communication methods may be applied alone or may be applied in combination thereof. In addition, the same component is assigned with the same reference numeral to omit redundant descriptions.

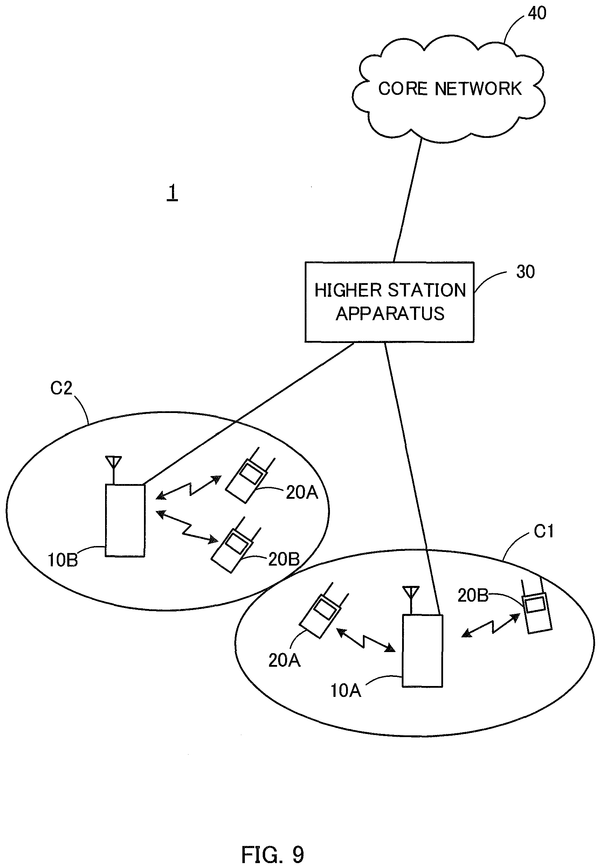

FIG. 9 is a diagram showing one example of a schematic configuration of the radio communication system according to one Embodiment of the present invention. In addition, the radio communication system 1 may be called SUPER 3G, LTE-A (LTE-Advanced), IMT-Advanced, 4G, 5G, FRA (Future Radio Access) and the like.

FIG. 9 is a diagram showing one example of a schematic configuration of the radio communication system according to this Embodiment. In addition, for example, the radio communication system 1 as shown in FIG. 9 is a system including an LTE system or LTE-A (LTE-Advanced) system. The radio communication system may be called IMT-Advanced, or may be called 4G or FRA (Future Radio Access).

The radio communication system 1 shown in FIG. 9 includes radio base stations 10 (10A, 10B), and a plurality of user terminals 20 (20A, 20B) that communicate with the radio base station 10. The radio base stations 10 are connected to a higher station apparatus 30, and are connected to a core network 40 via the higher station apparatus 30. Each user terminal 20 is capable of communicating with the radio base stations 10 in cells C1, C2, respectively. In addition, for example, the higher station apparatus 30 includes an access gateway apparatus, Radio Network Controller (RNC), Mobility Management Entity (MME) and the like, but is not limited thereto. Further, the radio base stations 10 may be subjected to wired connection (optical fiber, X2 interface and the like) or wireless connection.

In addition, the radio base station 10 may be a macro base station, collection node, eNodeB (eNB), transmission/reception point and the like for forming a macro cell, or may be a small base station, micro-base station, pico-base station, femto-base station, Home eNodeB (HeNB), RRH (Remote Radio Head), transmission/reception point and the like for forming a small cell. Each user terminal 20 is a terminal supporting various communication schemes such as LTE and LTE-A, and may include a fixed communication terminal, as well as the mobile communication terminal.

In the radio communication system 1, as radio access schemes, NOMA (Non-Orthogonal Multiple Access) is applied on downlink, and SC-FDMA (Single Carrier Frequency Division Multiple Access) is applied on uplink. Further, OFDMA (Orthogonal Frequency Division Multiple Access) may be applied on downlink. In addition, uplink and downlink radio access schemes are not limited to the combination of the schemes.

NOMA is a multicarrier transmission scheme for dividing a frequency band into a plurality of narrow frequency bands (subcarriers, sub-bands or the like), and performing non-orthogonal multiplexing on signals of user terminals 20 with different transmit power for each sub-band, and OFDMA is a multicarrier transmission scheme for dividing a frequency band into a plurality of sub-bands, and performing orthogonal multiplexing on signals of user terminals 20 for each sub-band to perform communication. SC-FDMA is a single-carrier transmission scheme for dividing a system bandwidth into bands comprised of a single or contiguous resource blocks for each terminal so that a plurality of user terminals 20 uses mutually different bands, and thereby reducing interference among user terminals.

Described herein are communication channels used in the radio communication system 1. The downlink communication channels include a downlink shared data channel (PDSCH: Physical Downlink Shared Channel) shared by user terminals 20, broadcast channel (PBCH: Physical Broadcast Channel), downlink L1/L2 control channels (PDCCH, EPDCCH, PCFICH, PHICH, etc.) and the like. User data, higher layer control information, SIB (System Information Block) and the like are transmitted on the PDSCH. Further, MIB (Master Information Block) is transmitted on the PBCH.

Downlink control information (DCI) including scheduling information of the PDSCH and PUSCH is transmitted on the PDCCH (Physical Downlink Control Chanel). The EPDCCH is frequency division multiplexed with the PDSCH (downlink shared data channel) to be used in transmitting the DCI and the like as the PDCCH. The number of OFDM symbols used in the PDCCH is transmitted on the PCFICH (Physical Control Format Indicator Channel). A receipt confirmation signal (e.g. ACK/NACK) of HARQ (Hybrid ARQ) for the PUSCH is transmitted on the PHICH (Physical Hybrid-ARQ Indicator Channel).

Further, the uplink communication channels include an uplink shared channel (PUSCH: Physical Uplink Shared Channel) shared by user terminals 20, uplink control channel (PUCCH: Physical Uplink Control Channel), random access channel (PRACH: Physical Random Access Channel) and the like. User data and higher layer control information is transmitted on the PUSCH. Further, radio quality information (CQI: Channel Quality Indicator) of downlink, receipt conformation signal and the like are transmitted on the PUCCH. A random access preamble to establish connection with the cell is transmitted on the PRACH.

(Radio base station)

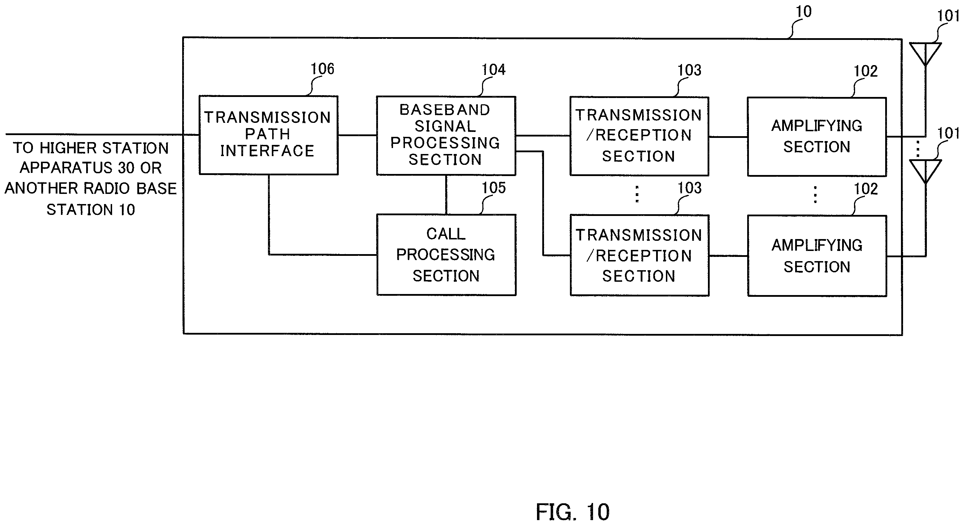

FIG. 10 is a diagram showing one example of an entire configuration of the radio base station according to one Embodiment of the present invention. The radio base station 10 is provided with a plurality of transmission/reception antennas 101, amplifying sections 102, transmission/reception sections 103, baseband signal processing section 104, call processing section 105, and transmission path interface 106. In addition, with respect to each of the transmission/reception antenna 101, amplifying section 102, and transmission/reception section 103, the radio base station is essentially configured to include at least one or more.

User data to transmit to the user terminal 20 from the radio base station 10 on downlink is input to the baseband signal processing section 104 from the higher station apparatus 30 via the transmission path interface 106.

The baseband signal processing section 104 performs, on the user data, transmission processing such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (e.g. transmission processing of HARQ (Hybrid Automatic Repeat reQuest)), scheduling, transmission format selection, channel coding, Inverse Fast Fourier Transform (IFFT) processing, and precoding processing to transfer to the transmission/reception sections 103. Further, also concerning a downlink control signal, the section 104 performs transmission processing such as channel coding and Inverse Fast Fourier Transform on the signal to transfer to the transmission/reception sections 103.

Each of the transmission/reception sections 103 converts the baseband signal, which is subjected to precoding for each antenna and is output from the baseband signal processing section 104, into a signal with a radio frequency band to transmit. The radio-frequency signal subjected to frequency conversion in the transmission/reception section 103 is amplified in the amplifying section 102, and is transmitted from the transmission/reception antenna 101. The transmission/reception section 103 is capable of being comprised of a transmitter/receiver, transmission/reception circuit or transmission/reception apparatus explained based on common recognition in the technical field according to the present invention. In addition, the transmission/reception section 103 may be comprised as an integrated transmission/reception section, or may be comprised of a transmission section and reception section.

The transmission/reception section 103 transmits information on the phase rotation to the user terminal 20 by higher layer signaling (RRC, etc.) and downlink control information (DCI). Further, the section 103 transmits a modulated signal of data of each user terminal on the PDSCH.

On the other hand, for uplink signals, radio-frequency signals received in the transmission/reception antennas 101 are amplified in the amplifying sections 102. The transmission/reception section 103 receives the uplink signal amplified in the amplifying section 102. The transmission/reception section 103 performs frequency conversion on the received signal into a baseband signal to output to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

The transmission path interface 106 transmits and receives signals to/from the higher station apparatus 30 via a predetermined interface. Further, the transmission path interface 106 may transmit and receive signals (backhaul signaling) to/from an adjacent radio base station 10 via an inter-base station interface (e.g. optical fiber in conformity with CPRI (Common Public Radio Interface), X2 interface).

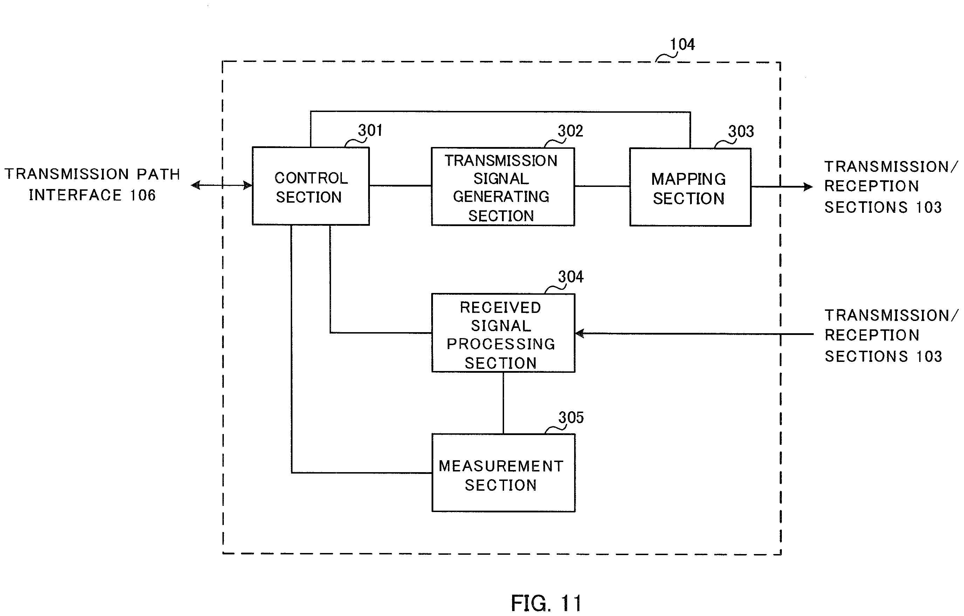

FIG. 11 is a diagram showing one example of a function configuration of the radio base station according to one Embodiment of the present invention. In addition, FIG. 11 mainly illustrates function blocks of a characteristic portion according to one Embodiment of the invention, and the radio base station 10 is assumed to have other function blocks required for radio communication. As shown in FIG. 11, the baseband signal processing section 104 is provided with a control section (scheduler) 301, transmission signal generating section 302, mapping section 303, received signal processing section 304, and measurement section 305.

The control section (scheduler) 301 performs control of the entire radio base station 10. The control section 301 is capable of being comprised of a controller, control circuit or control apparatus explained based on the common recognition in the technical field according to the present invention.

For example, the control section 301 controls generation of signals by the transmission signal generating section 302, and assignment of signals by the mapping section 303. Further, the control section 301 controls reception processing of signals by the received signal processing section 304, and measurement of signals by the measurement section 305.

The control section 301 controls scheduling (e.g. resource allocation) of system information, a downlink data signal transmitted on the PDSCH and downlink control signal transmitted on the PDCCH and/or EPDCCH. Further, the control section 301 controls scheduling of a synchronization signal and downlink reference signals such as the CRS (Cell-specific Reference Signal), CSI-RS (Channel State Information Reference Signal), and DMRS (Demodulation Reference signal).

Further, the control section 301 controls scheduling of an uplink data signal transmitted on the PUSCH, uplink control signal (e.g. receipt conformation signal (HARQ-ACK)) transmitted on the PUCCH and/or the PUSCH, random access preamble transmitted on the PRACH, uplink reference signal and the like.

Furthermore, the control section 301 applies a predetermined phase rotation to a downlink data signal transmitted to each user terminal, and controls information ($\theta$, table index) on the phase rotation. Specifically, the control section 301 controls the transmission signal generating section 302 and mapping section 303 so as to transmit, to the user terminal 20, the downlink data signal (PDSCH, etc.) with the predetermined phase rotation applied, and higher layer signaling (RRC, etc.) and downlink control signal (DCI) (PDCCH and/or EPDCCH) including the information on the phase rotation $\theta$.

Still furthermore, the control section 301 controls power of a transmission signal to each user terminal 20 so as to properly perform power multiplexing. Further, the control section 301 may determine whether the transmission signal generating section 302 applies a phase rotation to a modulated signal, corresponding to the ratio of transmit power of each user terminal 20.

Moreover, when the control section 301 is capable of using the DMRS, UE-specific Reference Signal and the like, the section 301 may make parameters of values of the phase rotation, transmit power ratio, precoding vector and the like of the reference signal the same as parameters of the downlink data signal.

Based on instructions from the control section 301, the transmission signal generating section 302 generates DL signals to output to the mapping section 303. The transmission signal generating section 302 is capable of being comprised of a signal generator, signal generating circuit or signal generating apparatus explained based on the common recognition in the technical field according to the present invention.

The transmission signal generating section 302 power-multiplexes modulated signals to respective user terminals 20. The transmission signal generating section 302 outputs the power-multiplexed modulated signals to the mapping section 303.

For example, based on instructions from the control section 301, the transmission signal generating section 302 generates a DL assignment for notifying of downlink signal assignment information and an UL grant for notifying of uplink signal assignment information. Further, the downlink data signal is subjected to coding processing and modulation processing according to a coding rate, modulation scheme and the like determined based on channel state information (CSI) from each user terminal 20 and the like.

Further, the transmission signal generating section 302 modulates the downlink signal to each user terminal 20, and multiplies by a precoding weight. Furthermore, when necessary, the transmission signal generating section 302 applies a phase rotation to the modulated downlink signal. Still furthermore, corresponding to the distance between the radio base station 10 and the user terminal 20, the transmission signal generating section 302 controls power of the downlink signal to each user terminal 20.

Moreover, the transmission signal generating section 302 may have a table in which an index and phase rotation $\theta$ are associated with each other. The table may be another table other than such a table, and for example, the index, MCS, transmit power ratio and information on the phase rotation may be associated with one another.

The transmission signal generating section 302 is capable of actualizing the data buffer section, turbo coding section, data modulation section, multiplying section, power adjusting section, non-orthogonal multiplexing section and the like in FIG. 3.

Based on instructions from the control section 301, the mapping section 303 maps the downlink signal generated in the transmission signal generating section 302 to predetermined radio resources to output to the transmission/reception section 103. The mapping section 303 is capable of being comprised of a mapper, mapping circuit or mapping apparatus explained based on the common recognition in the technical field according to the present invention. The mapping section 303 is capable of actualizing the multiplexing section in FIG. 3.

The received signal processing section 304 performs reception processing (e.g. demapping, demodulation, decoding and the like) on the received signal input from the transmission/reception section 103. Herein, for example, the received signal is a UL signal (uplink control signal, uplink data signal) transmitted from the user terminal 20 and the like. The received signal processing section 304 is capable of being comprised of a signal processor, signal processing circuit or signal processing apparatus explained based on the common recognition in the technical field according to the present invention.

The received signal processing section 304 outputs information decoded by the reception processing to the control section 301. Further, the received signal processing section 304 outputs the received signal and signal subjected to the reception processing to the measurement section 305.

The measurement section 305 performs measurement on the received signal. The measurement section 305 is capable of being comprised of a measurement device, measurement circuit or measurement apparatus explained based on the common recognition in the technical field according to the present invention.

For example, the measurement section 305 may measure received power (e.g. RSRP (Reference Signal Received Power)), received quality (e.g. RSRQ (Reference Signal Received Quality)), channel state and the like of the received signal. The measurement result may be output to the control section 301.

(User terminal)

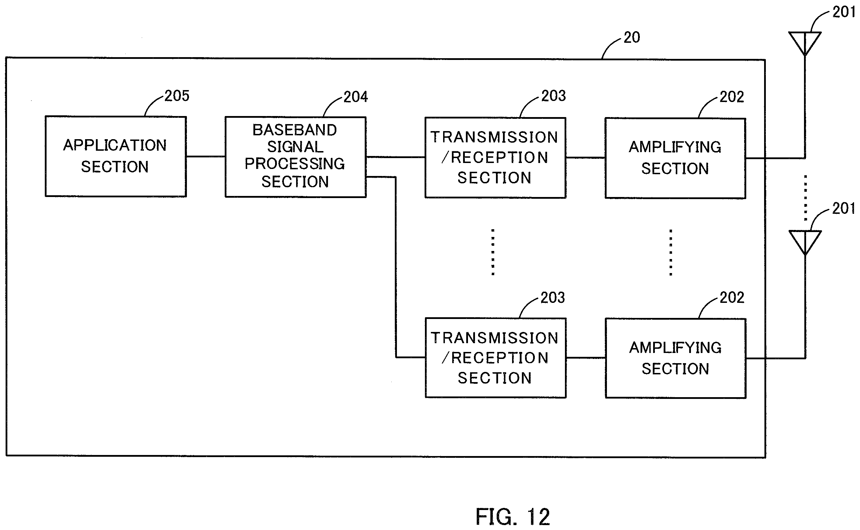

FIG. 12 is a diagram showing one example of an entire configuration of the user terminal according to this Embodiment. The user terminal 20 is provided with a plurality of transmission/reception antennas 201, amplifying sections 202, transmission/reception sections 203, baseband signal processing section 204, and application section 205. In addition, with respect to each of the transmission/reception antenna 201, amplifying section 202, and transmission/reception section 203, the user terminal is essentially configured to include at least one or more.

Radio-frequency signals received in the transmission/reception antennas 201 are respectively amplified in the amplifying sections 202. Each of the transmission/reception sections 203 receives the downlink signal amplified in the amplifying section 202. The transmission/reception section 203 performs frequency conversion on the received signal into a baseband signal to output to the baseband signal processing section 204. The transmission/reception section 203 is capable of being comprised of a transmitter/receiver, transmission/reception circuit or transmission/reception apparatus explained based on the common recognition in the technical field according to the present invention. In addition, the transmission/reception section 203 may be comprised as an integrated transmission/reception section, or may be comprised of a transmission section and reception section.

The transmission/reception section 203 receives the downlink data signal (PDSCH) to which modulated signals to a plurality of user terminals are power-multiplexed as described above. Further, the transmission/reception section 203 receives higher layer signaling (RRC, etc.) and downlink control signal (DCI) including the information on the phase rotation.

The baseband signal processing section 204 performs FFT processing, error correcting decoding, reception processing of retransmission control and the like on the input baseband signal. User data on downlink is transferred to the application section 205. The application section 205 performs processing concerning layers higher than physical layer and MAC layer, and the like. Further, among the downlink data, broadcast information is also transferred to the application section 205.

On the other hand, for user data on uplink, the data is input to the baseband signal processing section 204 from the application section 205. The baseband signal processing section 204 performs transmission processing of retransmission control (e.g. transmission processing of HARQ), channel coding, precoding, Discrete Fourier Transform (DFT) processing, IFFT processing and the like to transfer to the transmission/reception sections 203. Each of the transmission/reception sections 203 converts the baseband signal output from the baseband signal processing section 204 into a signal with a radio frequency band to transmit. The radio-frequency signals subjected to frequency conversion in the transmission/reception sections 203 are amplified in the amplifying sections 202, and transmitted from the transmission/reception antennas 201, respectively.

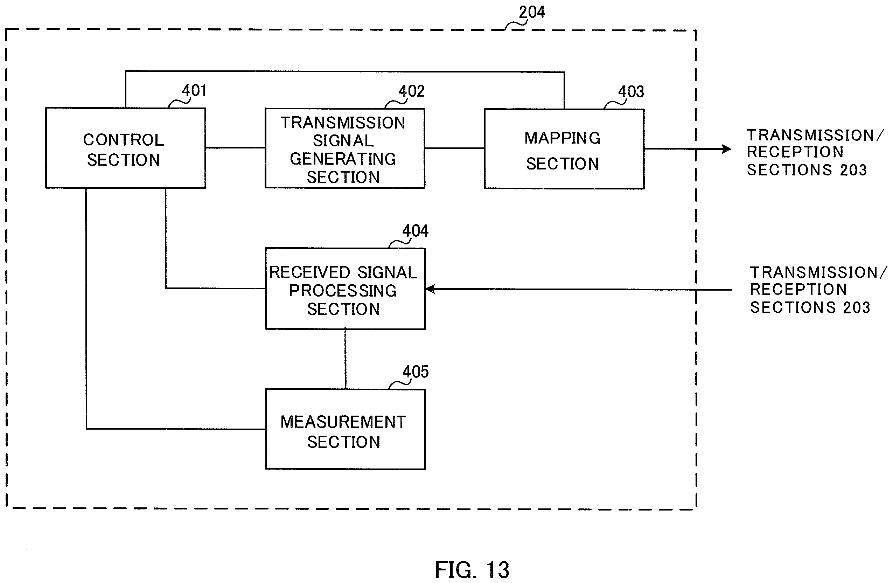

FIG. 13 is a diagram showing one example of a function configuration of the user terminal according to this Embodiment. In addition, FIG. 13 mainly illustrates function blocks of a characteristic portion in this Embodiment, and the user terminal 20 is assumed to have other function blocks required for radio communication. As shown in FIG. 13, the baseband signal processing section 204 that the user terminal 20 has is provided with a control section 401, transmission signal generating section 402, mapping section 403, received signal processing section 404, and measurement section 405.

The control section 401 performs control of the entire user terminal 20. The control section 401 is capable of being comprised of a controller, control circuit or control apparatus explained based on the common recognition in the technical field according to the present invention.

For example, the control section 401 controls generation of signals by the transmission signal generating section 402, and assignment of signals by the mapping section 403. Further, the control section 401 controls reception processing of signals by the received signal processing section 404, and measurement of signals by the measurement section 405.

The control section 401 acquires the downlink control signal (signal transmitted on the PDCCH/EPDCCH) and downlink data signal (signal transmitted on the PDSCH) transmitted from the radio base station 10 from the received signal processing section 404. Based on the downlink control signal, a result of judging necessity of retransmission control to the downlink data signal and the like, the control section 401 controls generation of the uplink control signal (e.g. receipt conformation signal (HARQ-ACK) and the like) and uplink data signal.

Based on instructions from the control section 401, the transmission signal generating section 402 generates UL signals to output to the mapping section 403. The transmission signal generating section 402 is capable of being comprised of a signal generator, signal generating circuit or signal generating apparatus explained based on the common recognition in the technical field according to the present invention.

For example, based on instructions from the control section 401, the transmission signal generating section 402 generates the uplink control signal concerning the receipt conformation signal (HARQ-ACK) and channel state information (CSI). Further, based on instructions from the control section 401, the transmission signal generating section 402 generates the uplink data signal. For example, when the UL grant is included in the downlink control signal notified from the radio base station 10, the transmission signal generating section 402 is instructed to generate the uplink data signal from the control section 401.

Based on instructions from the control section 401, the mapping section 403 maps the uplink signal generated in the transmission signal generating section 402 to radio resources to output to the transmission/reception section 203. The mapping section 403 is capable of being comprised of a mapper, mapping circuit or mapping apparatus explained based on the common recognition in the technical field according to the present invention.

The received signal processing section 404 performs reception processing (e.g. demapping, demodulation, decoding and the like) on the received signal input from the transmission/reception section 203. Herein, for example, the received signal is the DL signal (downlink control signal, downlink data signal and the like) transmitted from the radio base station 10. The received signal processing section 404 is capable of being comprised of a signal processor, signal processing circuit or signal processing apparatus explained based on the common recognition in the technical field according to the present invention. Further, the received signal processing section 404 is capable of constituting the reception section according to the present invention.

The received signal processing section 404 outputs information decoded by the reception processing to the control section 401. For example, the received signal processing section 404 outputs the broadcast information, system information, RRC signaling, DCI and the like to the control section 401. Further, the received signal processing section 404 outputs the received signal and signal subjected to the reception processing to the measurement section 405.

Moreover, using the information on the phase rotation, the received signal processing section 404 acquires the modulated signal of each user terminal prior to application of the phase rotation $\theta$. The received signal processing section 404 is capable of actualizing the MMSE section, demodulation decoding section, interference replica generating section, interference cancellation section and the like in FIG. 4.

The measurement section 405 performs measurement on the received signal. The measurement section 405 is capable of being comprised of a measurement device, measurement circuit or measurement apparatus explained based on the common recognition in the technical field according to the present invention.

For example, the measurement section 405 may measure received power (e.g. RSRP), received quality (e.g. RSRQ), channel state and the like of the received signal. The measurement result may be output to the control section 401. The measurement section 405 is capable of actualizing the channel estimation section in FIG. 4.

In addition, the block diagrams used in explanation of the above-mentioned Embodiment show blocks on a function-by-function basis. These function blocks (configuration section) are actualized by any combination of hardware and software. Further, the means for actualizing each function block is not limited particularly. In other words, each function block may be actualized by a single physically combined apparatus, or two or more physically separated apparatuses are connected by cable or radio, and each function block may be actualized by a plurality of these apparatuses.

For example, a part or the whole of each of functions of the radio base station 10 and user terminal 20 may be actualized using hardware such as ASIC (Application Specific Integrated Circuit), PLD (Programmable Logic Device), and FPGA (Field Programmable Gate Array). Further, each of the radio base station 10 and user terminal 20 may be actualized by a computer apparatus including a processor (CPU: Central Processing Unit), communication interface for network connection, memory, and computer-readable storage medium holding programs. In other words, the radio base station, user terminal and the like according to one Embodiment of the present invention may function as a computer for performing processing of the radio communication method according to the invention.

Herein, the processor, memory and the like are connected on the bus to communicate information. Further, for example, the computer-readable storage medium is a storage medium such as a flexible disk, magneto-optical disk, ROM (Read Only Memory), EPROM (Erasable Programmable ROM), CD-ROM (Compact Disc-ROM), RAM (Random Access Memory) and hard disk. Furthermore, the program may be transmitted from a network via an electrical communication line. Still furthermore, each of the radio base station 10 and user terminal 20 may include an input apparatus such as input keys and output apparatus such as a display.

The function configurations of the radio base station 10 and user terminal 20 may be actualized by the above-mentioned hardware, may be actualized by software modules executed by the processor, or may be actualized in combination of the hardware and software modules. The processor operates an operating system to control the entire user terminal. Further, the processor reads the program, software module and data from the storage medium onto the memory, and according thereto, executes various kinds of processing.

Herein, it is essential only that the program is a program for causing the computer to execute each operation described in each of the above-mentioned Embodiments. For example, the control section 401 of the user terminal 20 may be actualized by a control program stored in the memory to operate by the processor, and the other function blocks may be actualized similarly.

As described above, the present invention is specifically described, but it is obvious to a person skilled in the art that the invention is not limited to the Embodiments described in the present Description. For example, each of the above-mentioned Embodiments may be used alone or may be used in combination. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

The present application is based on Japanese Patent Application No. 2015-073867 filed on March 31, 2015, entire content of which is expressly incorporated by reference herein.

**Claims**

1. A radio base station comprising:

    a transmission section that performs power multiplexing on downlink signals subsequent to precoding multiplication to a plurality of user terminals each having a MIMO (Multiple-Input Multiple-Output) configuration to transmit; and
    a control section that controls a phase rotation applied to the downlink signal to each user terminal, wherein the control section controls so as to apply different phase rotations to the downlink signals subsequent to precoding multiplication.

2. The radio base station according to claim 1, wherein in the transmission section, a precoding weight multiplied by the downlink signal to each user terminal is different from one another.

3. The radio base station according to claim 1, wherein in the transmission section, a precoding weight multiplied by the downlink signal to each user terminal is the same.

4. The radio base station according to any one of claims 1 to 3, wherein the transmission section transmits information on the phase rotation to the user terminal.

5. The radio base station according to claim 4, wherein the information on the phase rotation is an index associated with the phase rotation.

6. The radio base station according to claim 4, wherein the information on the phase rotation is information on only the presence or absence of the phase rotation.

7. The radio base station according to any one of claims 1 to 3, wherein the control section controls so as to apply the same phase rotation as in a downlink data signal to a user terminal-specific reference signal.

8. The radio base station according to any one of claims 1 to 7, wherein the control section controls so as to apply the phase rotation for each transmission layer.

9. A user terminal comprising:

    a reception section that receives a power-multiplexed downlink signal; and
    a received signal processing section that performs reception processing on the downlink signal, based on information on a phase rotation applied to the downlink signal,
    wherein the phase rotation is different from a phase rotation applied to a downlink signal to another user terminal.

10. A radio communication method including:

    performing power multiplexing on downlink signals subsequent to precoding multiplication to a plurality of user terminals each having a MIMO (Multiple-Input Multiple-Output) configuration to transmit; and

controlling so as to apply a different phase rotation to the downlink signal to each user terminal.

FIG. 1A

Power

Frequency

BS

UE#1

UE#2

| SIC (UE#2) | → | DECODING (UE#1) | → |

| DECODING (UE#2) | → |

FIG. 1B

PRECODING WEIGHT

| DATA BUFFER SECTION | → | TURBO CODING SECTION | → | DATA MODULATION SECTION |

POWER ADJUSTING SECTION

POWER ADJUSTING SECTION

STREAMS #1-2

UE #1-2

CRS, ETC.

NON-ORTHOGONAL MULTIPLEXING SECTION

MULTIPLEXING SECTION

ANTENNAS #1-2

FIG. 2

EP 3 280 081 A1

PRECODING WEIGHT, θ

DATA BUFFER SECTION → TURBO CODING SECTION → DATA MODULATION SECTION → ⊗

⊗

POWER ADJUSTING SECTION

POWER ADJUSTING SECTION

STREAMS #1-2

UE #1-2

CRS, ETC.

NON-ORTHOGONAL MULTIPLEXING SECTION → MULTIPLEXING SECTION

ANTENNAS #1-2

θ (or table index)

FIG. 3

FIG. 4A

RECEIVED SIGNAL

ANTENNAS #1-2

CRS

CHANNEL
ESTIMATION
SECTION

INTERFERENCE USER TERMINAL (UE #2)

| MMSE
SECTION | → | DEMODULATION ·
DECODING
SECTION | → | INTERFERENCE
REPLICA
GENERATING
SECTION |

DESIRED USER TERMINAL (UE #1)

STREAMS #1-2

RECEIVED
DATA

| INTERFERENCE
CANCELLATION
SECTION | → | MMSE
SECTION | → | DEMODULATION ·
DECODING
SECTION |

from BS → $\theta$ (or table index)

STREAM #1-2

FIG. 4B

RECEIVED SIGNAL

ANTENNAS #1-2

CRS

CHANNEL
ESTIMATION
SECTION

DESIRED USER TERMINAL (UE #2)

RECEIVED
DATA

| MMSE
SECTION | → | DEMODULATION
· DECODING
SECTION |

STREAMS #1-2

20

EP 3 280 081 A1

FIG. 5

FIG. 6A

RECEIVED SIGNAL

ANTENNAS #1-2

CRS

INTERFERENCE USER TERMINAL (UE #2)

CHANNEL
ESTIMATION
SECTION

MMSE
SECTION

DEMODULATION ·
DECODING
SECTION

INTERFERENCE
REPLICA
GENERATING
SECTION

DESIRED USER TERMINAL (UE #1)

STREAMS #1-2

INTERFERENCE
CANCELLATION
SECTION

MMSE
SECTION

DEMODULATION ·
DECODING
SECTION

RECEIVED
DATA

from BS

θ (or table index)

STREAMS #1-2

FIG. 6B

RECEIVED SIGNAL

ANTENNAS #1-2

CRS

DESIRED USER TERMINAL (UE #2)

CHANNEL
ESTIMATION
SECTION

MMSE
SECTION

DEMODULATION
·DECODING·
SECTION

RECEIVED
DATA

STREAMS #1-2

from BS

θ (or table index)

| Index | θ |
|-------|------|
| 1 | 45° |
| 2 | 30° |
| 3 | 0° |
| 4 | 70° |

FIG. 7A

| Index | $MCS_1$ | $MCS_2$ | $P_1$ | $P_2$ | θ |
|-------|---------|---------|-------|-------|------|
| 1 | 16QAM | 16QAM | 0.3 | 0.7 | 45° |
| 2 | 16QAM | QPSK | 0.35 | 0.65 | 30° |
| 3 | QPSK | QPSK | 0.25 | 0.75 | 0° |
| 4 | 64QAM | QPSK | 0.2 | 0.8 | 70° |

FIG. 7B

FIG. 8A

FIG. 8B

FIG. 9

FIG. 10

10

101 — 101

102 AMPLIFYING SECTION ... 102 AMPLIFYING SECTION

103 TRANSMISSION /RECEPTION SECTION ... 103 TRANSMISSION /RECEPTION SECTION

104 BASEBAND SIGNAL PROCESSING SECTION

105 CALL PROCESSING SECTION

106 TRANSMISSION PATH INTERFACE

TO HIGHER STATION APPARATUS 30 OR ANOTHER RADIO BASE STATION 10

FIG. 11

TRANSMISSION/ RECEPTION SECTIONS 103

TRANSMISSION/ RECEPTION SECTIONS 103

104

303 MAPPING SECTION

302 TRANSMISSION SIGNAL GENERATING SECTION

304 RECEIVED SIGNAL PROCESSING SECTION

305 MEASUREMENT SECTION

301 CONTROL SECTION

TRANSMISSION PATH INTERFACE 106

FIG. 12

204

401 CONTROL SECTION

402 TRANSMISSION SIGNAL GENERATING SECTION

403 MAPPING SECTION

404 RECEIVED SIGNAL PROCESSING SECTION

405 MEASUREMENT SECTION

TRANSMISSION/ RECEPTION SECTIONS 203

TRANSMISSION/ RECEPTION SECTIONS 203

FIG. 13

EP 3 280 081 A1

**INTERNATIONAL SEARCH REPORT**

International application No.

PCT/JP2016/058869

A. CLASSIFICATION OF SUBJECT MATTER
*H04J99/00(2009.01)i, H04B7/04(2006.01)i, H04W16/28(2009.01)i*

According to International Patent Classification (IPC) or to both national classification and IPC

B. FIELDS SEARCHED

Minimum documentation searched (classification system followed by classification symbols)
H04J99/00, H04B7/04, H04W16/28

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
IEEE Xplore, CiNii

C. DOCUMENTS CONSIDERED TO BE RELEVANT

| Category* | Citation of document, with indication, where appropriate, of the relevant passages | Relevant to claim No. |
|---|---|---|
| Y | Keita NAKAGAWA et al., "Study on spatial division multiplexing using successive interference cancellation and ZF", Proceedings of the 2014 IEICE General Conference Tsushin 1, 04 March 2014 (04.03.2014), page 190, B-1-190 | 1-10 |
| Y | Issei WAKAI et al., "Phase Rotation Multiplexing and Its Performance by MLD for Non-Orthogonal Multiple Access", Proceedings of the 2015 IEICE General Conference Tsushin 1, 24 February 2015 (24.02.2015), page 395, B-5-40 | 1-10 |

[X] Further documents are listed in the continuation of Box C.    [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 May 2016 (09.05.16) | Date of mailing of the international search report<br>17 May 2016 (17.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

30

**INTERNATIONAL SEARCH REPORT**

| | International application No. |
|---|---|
| | PCT/JP2016/058869 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-525665 A  (LG Electronics Inc.),<br>09 July 2009 (09.07.2009),<br>fig. 2 to 3, 6 to 7<br>& JP 4777440 B           & US 2007/0195907 A1<br>fig. 2 to 3, 6 to 7<br>& WO 2007/089110 A2     & KR 10-2008-0089493 A<br>& CN 101444060 A | 1-10 |
| Y | US 2010/0284491 A1  (HUAWEI TECHNOLOGIES),<br>11 November 2010 (11.11.2010),<br>fig. 3 to 11<br>& WO 2009/094913 A1     & EP 2234358 A1<br>& CN 101494629 A | 1-10 |
| Y | WO 2014/148318 A1  (Sharp Corp.),<br>25 September 2014 (25.09.2014),<br>paragraphs [0038] to [0039]<br>& US 2016/0020882 A1<br>paragraphs [0055] to [0056] | 7-8 |

Form PCT/ISA/210 (continuation of second sheet) (January 2015)

**EP 3 280 081 A1**

**Patent documents cited in the description**

- JP 2015073867 A